# EUROPEAN PATENT APPLICATION

(11) **EP 3 828 735 A1**
(43) Date of publication of application: **02.06.2021**
(21) Application number: 18930981.8
(22) Date of filing: 23.08.2018
(51) Int. Cl.: G06F 17/00

(54) **METHOD, DEVICE AND SYSTEM FOR FORMING FUSION MODEL, MEDIUM, PROCESSOR AND TERMINAL**

(71) Applicant: Siemens Aktiengesellschaft, 80333 München (DE); Yu, He, Wuxi, Jiangsu 214123 (CN); Wang, Qi, Wuhan, Hubei 430080 (CN); Zhou, Wenjing, Wuxi, Jiangsu 214122 (CN)
(72) Inventor: YU, He, Wuxi, Jiangsu 214123 (CN); WANG, Qi, 430075 Wuhan (CN); ZHOU, Wenjing, 214000 Wuxi, JiangSu (CN)
(74) Representative: Isarpatent
(86) International application number: PCT/CN2018/101974
(87) International publication number: WO 2020/037609

(57) **Abstract**

A method, device and system for forming a fusion model, a medium, a processor and a terminal. The method for forming a fusion model of fused data and applications comprises: displaying a predetermined data element among data elements of a data acquisition model in a first part of a first interface, wherein the data acquisition model is used to acquire data, and the data element characterizes data attributes; displaying the data model retrieved from a database according to the requirements of the application in a second part of the first interface; and in a third part of the first interface, establishing a correlation between the predetermined data element and the data model to form a fusion model. This method forms a fusion model by establishing a corresponding operation, and input-output relationships between the data elements of the data acquisition model and the data model, and bridges data and applications through the fusion model, which reduces the coupling between data and applications, and can simply and flexibly fuse data and applications.

## Description

### Technical Field

The present invention relates to the field of data application. Specifically, the present invention relates to a method, device, system, medium, processor, and terminal for forming an interfusion model.

### Background Art

It is generally known that the development of cloud services has driven a broader technological ecosystem; for example, big data are collected to the cloud, and more and more applications or cloud services are pushed to the cloud. The ultimate goal of this large ecosystem is to maximize the value of data. However, demonstration of these data values is reflected by the application of business logic. In fact, a large number of excellent commercial software programs, such as some OEE apps, are available, but these applications are closely coupled with data. In order to reduce the coupling between applications and data, and to effectively and conveniently interfuse data with an application, it is necessary to consider how to solve the following three problems:
- It takes effort to select the right data from extensive data;
- Raw data need to be pre-processed to adapt to an upper-layer application; and
- It should be convenient to organize a data model/data structure and synchronize data to an application database.

In the prior art, an API learning test platform is provided, which supports extraction of user/developer verification data, for example, by building a Swagger system for the platform to allow a user to verify API parameters and give feedback on results. However, it is a communication feedback in a single response, and the user cannot obtain any data characteristics.

In addition, in the prior art, users need to put in a great deal of effort to perform logical business coding, for example, processing raw data by an application module and a back-end logic program module, so that the raw data meets application requirements. In the event of a change in a business requirement of the application, it takes effort to modify the data extraction, data structure, and logic processing.

### Summary of the Invention

An embodiment of the present invention provides a method, device, system, medium, processor, and terminal for forming an interfusion model to at least solve the problem that, when an application requirement has changed during the interfusion of data with an application, a user needs to put in a great deal of effort to interfuse the data with the application.

According to one aspect of an embodiment of the present invention, a method for forming an interfusion model of interfusing data with an application is provided, comprising: displaying a data model retrieved from a database according to a requirement of the application in a first part of a first interface; displaying, in a second part of the first interface, a predetermined data element among data elements of a data acquisition model, wherein the data acquisition model is used to acquire data, and the data elements represent attributes of the data; and establishing, in a third part of the first interface, a corresponding relation between the predetermined data element and the data model to form an interfusion model.

Thus, for different application requirements, a user can select a corresponding data model, and form an interfusion model by establishing a corresponding relation between the data elements of the data acquisition model used to acquire data and the data model; the interfusion model preprocesses the data into input data required by the data model, thereby forming a connection between the actual data and the data model; a user does not need to complete the mapping between front-end application display and back-end code through hard coding, and thus the coupling between data and an application is reduced; this allows a user to interfuse data with an application conveniently and flexibly, solving the problem that, when an application requirement has changed during the interfusion of data with an application, a user needs to put in a great deal of effort to interfuse the data with the application.

In an exemplary embodiment of a method for forming an interfusion model of interfusing data with an application, establishing, in a third part of the first interface, a corresponding relation between the predetermined data element and the data model to form the interfusion model comprises: selecting a predetermined data element from the data elements according to the data structure of the data model; and setting a calculation relation and an input/output relation between the predetermined data element and the data model to form the interfusion model.

Thus, by selecting a predetermined data element according to the data structure of the data model, a seamless connection may be formed between actual data and a virtual data structure, and by setting a calculation relation and an input/output relation between a predetermined data element and a data model, data may be preprocessed into input data required by the data model, so that the input data can effectively support the application.

In an exemplary embodiment of the method for forming an interfusion model of interfusing data with an application, establishing, in a third part of the first interface, a corresponding relation between the predetermined data element and the data model to form an interfusion model comprises: automatically setting a calculation relation and an input/output relation between the predetermined data element and the data model to form an interfusion model.

Thus, without the need for a user to understand the data structure of the data model, a seamless connection may be formed between actual data and a virtual data structure, which provides great convenience to the user; by setting a calculation relation and an input/output relation between a predetermined data element and a data model, data may be preprocessed into input data required by the data model, so that the input data can effectively support the application.

In an exemplary embodiment of the method for forming an interfusion model of interfusing data with an application, before displaying, in a second part of the first interface, a predetermined data element among data elements of a data acquisition model, the method further comprises: operating a first control in a first part of a second interface to cache data, wherein the first control indicates a connection configuration for obtaining the data from an internal cloud platform connection and/or an external cloud platform connection and/or an external software or system connection, and caching data comprises automatically classifying data based on data elements.

Thus, data may be collected and cached from a plurality of data sources, and automatic classification of cached data makes it convenient for a user to select data.

In an exemplary embodiment of the method for forming an interfusion model of interfusing data with an application, after operating a first control in a first part of a second interface to cache the data, the method further comprises: displaying data in a second part of the second interface.

Thus, a user can intuitively understand whether the cached data is the desired data.

In an exemplary embodiment of the method for forming an interfusion model of interfusing data with an application, after displaying a data model retrieved from a database according to a requirement of the application in a first part of a first interface, the method further comprises: processing the data model in the first part of the first interface to form a new data model, wherein the processing comprises at least one of the following: adding a new element to the data structure of the data model; reducing an element for the data structure of the data model; establishing or modifying an inter-element relation for the elements of the data structure of the data model; and changing the name of an element of the data structure of the data model.

Thus, besides using a pre-stored data model, a user may also edit or expand a data model according to actual needs, thereby meeting various needs of the user easily.

In an exemplary embodiment of the method for forming an interfusion model of interfusing data with an application, establishing, in a third part of the first interface, a corresponding relation between the predetermined data element and the data model to form an interfusion model comprises: selecting a predetermined data element from the data elements according to the data structure of a new data model; and setting a calculation relation and an input/output relation between the predetermined data element and the new data model to form an interfusion model.

Thus, by selecting a predetermined data element according to the data structure of a new data model, a seamless connection may be formed between actual data and a new virtual data structure, and by setting a calculation relation and an input/output relation between a predetermined data element and a new data model, data may be preprocessed into input data required by the new data model, so that the input data can effectively support the application.

In an exemplary embodiment of the method for forming an interfusion model of interfusing data with an application, establishing, in a third part of the first interface, a corresponding relation between the predetermined data element and the data model to form an interfusion model comprises: automatically setting a calculation relation and an input/output relation between a predetermined data element and a new data model to form an interfusion model.

Thus, without the need for a user to understand the data structure of the data model, a seamless connection may be formed between actual data and a virtual data structure, which provides great convenience to the user; by setting a calculation relation and an input/output relation between a predetermined data element and a new data model, data may be preprocessed into input data required by the new data model, so that the input data can effectively support the application.

In an exemplary embodiment of the method for forming an interfusion model of interfusing data with an application, after establishing, in a third part of the first interface, a corresponding relation between the predetermined data element and the data model to form the interfusion model, the method further comprises storing the interfusion model in a database.

Thus, the interfusion model may be used as a pre-stored model in the database, which allows an increase in the number of models in the database, providing more options for future use of models.

According to another aspect of an embodiment of the present invention, a device for forming an interfusion model of interfusing data with an application is further provided, comprising: a data interfusion module, wherein a data model retrieved from a database according to a requirement of the application is displayed in a first part of a first interface of the data interfusion module; a predetermined data element in the data elements of the data acquisition model is displayed in a second part of the first interface of the data interfusion module, wherein the data acquisition model is used to acquire data, and the data elements represent attributes of the data; and a corresponding relation between the predetermined data element and the data model is established in a third part of the first interface of the data interfusion module to form an interfusion model.

Thus, for different application requirements, a user can select a corresponding data model, and form an interfusion model by establishing a corresponding relation between the data elements of the data acquisition model used to acquire data and the data model; the interfusion model preprocesses the data into input data required by the data model, thereby forming a connection between the actual data and the data model; a user does not need to complete the mapping between front-end application display and back-end code through hard coding, and thus the coupling between data and an application is reduced; this allows a user to interfuse data with an application conveniently and flexibly, solving the problem that, when an application requirement has changed during the interfusion of data with an application, a user needs to put in a great deal of effort to interfuse the data with the application.

According to another aspect of an embodiment of the present invention, a system for forming an interfusion model of interfusing data with an application is further provided, comprising: a database; a data collection module for retrieving a data acquisition model from the database, wherein the data acquisition model is used to acquire data and comprises data elements that represent attributes of the data; and a data interfusion module, wherein a data model retrieved from a database according to a requirement of the application is displayed in a first part of a first interface of the data interfusion module; a predetermined data element in the data elements of the data acquisition model is displayed in a second part of the first interface of the data interfusion module; and a corresponding relation between the predetermined data element and the data model is established in a third part of the first interface of the data interfusion module to form an interfusion model.

Thus, for different application requirements, a user can select a corresponding data model from a database, and form an interfusion model by establishing a corresponding relation between the data elements of the data acquisition model adopted by the data collection module and the data model; the interfusion model preprocesses the data into input data required by the data model, thereby forming a connection between the actual data and the data model; a user does not need to complete the mapping between front-end application display and back-end code through hard coding, and thus the coupling between data and an application is reduced; this allows a user to interfuse data with an application conveniently and flexibly, solving the problem that, when an application requirement has changed during the interfusion of data with an application, a user needs to put in a great deal of effort to interfuse the data with the application.

According to another aspect of an embodiment of the present invention, a storage medium is further provided, the storage medium storing a program, wherein the program, when run, implements the above-described method for forming an interfusion model of interfusing data with an application.

According to another aspect of an embodiment of the present invention, a processor for running a program is further provided, wherein the program, when run, implements the above-described method for forming an interfusion model of interfusing data with an application.

According to another aspect of an embodiment of the present invention, a terminal is further provided, comprising: one or more processors, a memory, a display device, and one or more programs, wherein the one or more programs are stored in the memory and are configured to, when run by the one or more processors, execute the above-described method for forming an interfusion model of interfusing data with an application.

In an embodiment of the present invention, for different application requirements, a user can select a corresponding data model, and establish a corresponding relation between the data elements of a data acquisition model used to acquire data and the data model, thereby forming a connection between actual data and the data model; a user does not need to complete the mapping between front-end application display and back-end code through hard coding, and thus the coupling between data and an application is reduced; this allows a user to interfuse data with an application conveniently and flexibly, solving the problem that, when an application requirement has changed during the interfusion of data with an application, a user needs to put in a great deal of effort to interfuse the data with the application.

The present invention is suitable for interfusion of data with an application. By adopting the technology of the present invention, it is possible to optimize and expand BU business services, for example, supporting rapid interfusion of a Schaeffler project with another existing application/system for migration to the cloud, etc. In addition, the technology of the present invention is not limited to one business area; for different business departments, use of the technology of the present invention allows them to efficiently and conveniently transfer their business models to a cloud platform for expansion of business services.

### Brief Description of the Drawings

The drawings shown herein are intended to provide a further understanding of the present invention and constitute a part of the present invention. An exemplary embodiment of the present invention and a description thereof are intended to explain the present invention, and do not constitute an improper limitation of the present invention. Among the drawings,
Figure 1 is a block diagram for a system in which a method for forming an interfusion model of interfusing data with an application according to an embodiment of the present invention may be implemented;
Figure 2A and Figure 2B show interface diagrams for a data interfusion module;
Figure 3 shows a flowchart for a method for forming an interfusion model of interfusing data with an application according to an exemplary embodiment of the present invention; and
Figures 4A to 4D show interface diagrams for the process of forming an interfusion model in the data processing interface of the data interfusion module according to an embodiment of the present invention.

### Brief Description of the Reference Numerals

1: A system in which a method for forming an interfusion model of interfusing data with an application may be implemented; 1002: Data collection module;
1004: Application module;
1006: Data interfusion module;
1008: Template management module;
1010: Application library;
1012: Database;
1014: Gateway;
10142: Model builder;
10144: Adapter;
1016: Web browser;
1': Field data collection module;
202: Setting bar;
2020: Drop-down menu item;
2021: Homepage item;
2022: Folder item;
2023: Cloud connection item;
2024: External connection item;
2025: Calculation item;
2026: Virtual table entry;
2027: Monitoring item;
204: Title bar;
2041: Message item;
2042: Authority setting item;
2043: User setting item;
206: Data list area;
208: Edit area;
2082: Store item;
2084: Script editing area
210: Virtual table area;
212: Tool area
S302: View data;
S3022 - S3026: Sub-steps of S302;
S304: Select a data model according to a requirement of the application;
S306: Modify the selected data model;
S308: Select a predetermined element in the data acquisition model, and establish a corresponding relation between the predetermined data element and the selected data model to form an interfusion model;
S310: Store the instance.
S3102 - S3106: Sub-steps of S310.

### Specific Embodiments

In order for those of ordinary skill in the art to better understand the present invention, technical solutions provided in embodiments of the present invention will be described clearly and completely below with reference to the drawings for embodiments of the present invention. Obviously, the described embodiments are only some, but not all, embodiments of the present invention. Any embodiments obtained by those of ordinary skill in the art based on the described embodiments of the present invention without making inventive efforts fall into the protection scope of the present invention.

Note that terms such as "first" and "second" used in the description and claims of the present invention and the above-mentioned drawings are intended to differentiate between similar objects, instead of describing a specific sequence or a precedence relationship. It should be understood that data used this way are interchangeable where appropriate, so that embodiments of the present invention described herein may be implemented in a sequence other than any of those shown or described herein. Further, terms "comprising", "provided with", and any variants thereof are intended to cover nonexclusive inclusion. For example, a process, method, system, product, or device comprising a series of steps or modules or units are not necessarily limited to explicitly listed steps or modules or units, and instead may include other steps or modules or units that are not explicitly listed or are intrinsic to these processes, methods, systems, products, or devices.

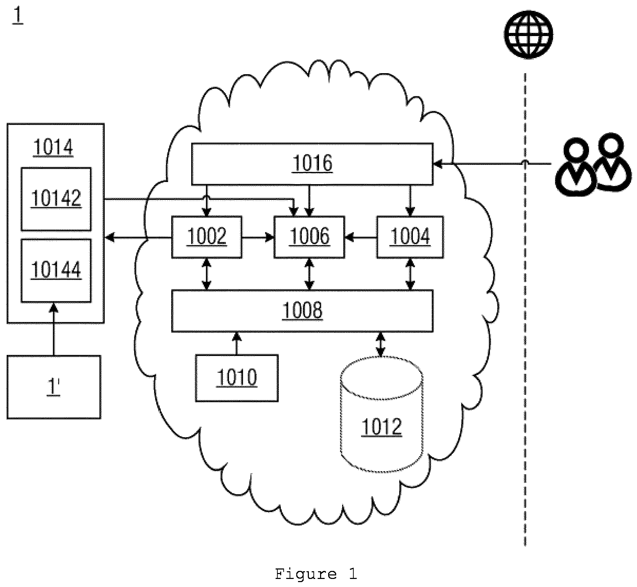

According to an embodiment of the present invention, a method for forming an interfusion model of interfusing data with an application is provided. Figure 1 is a block diagram for a system in which a method for forming an interfusion model of interfusing data with an application according to an embodiment of the present invention may be implemented, and the system is on a cloud platform. For the sake of clarity, the various parts of the system 1 shown in Figure 1 will be described first.

As shown in Figure 1, the system 1 mainly comprises: a data collection module 1002, an application module 1004, a data interfusion module 1006, a template management module 1008, an application library 1010, a database 1012, a gateway 1014, and a web browser 1016.

The data collection module 1002 is in communication connection with the data interfusion module 1006, the template management module 1008, the gateway 1014, and the web browser 1016, and is capable of retrieving a data acquisition model, for example, an asset model, from the database 1012 through the template management module 1008. A data acquisition model, for example, an asset model, is used to acquire data from the field, and comprises data elements that characterize the attributes of the data. The data collection module 1002 may send, for example, relevant parameters of a asset model, such as model structure, data elements, and information about the communication protocol used to obtain data, to the gateway 1016 and the data interfusion module 1006.

The application module 1004 is in communication connection with the data interfusion module 1006, the template management module 1008, and the web browser 1016; it can, according to the requirements of the application that the user wants to display, by the template management module 1008, allow a user to know which models are stored in the database and which models are used to meet the application requirements, and select a model that meets the application requirements and send the parameters describing the model to the data interfusion module 1006.

The data interfusion module 1006 is in communication connection with the data collection module 1002, the application module 1004, the gateway 1014, the template management module 1008, and the web browser 1016; it obtains relevant parameters, such as data elements, of the data acquisition model from the data collection module 1002. The data interfusion module 1006 also obtains, from the application module 1004, the parameters describing the data model that meets the application requirements, and retrieves the corresponding data model from the database 1012 by the template management module 1008 according to the parameters. Here, a data model refers to a functional block in which a plurality of elements are combined according to a certain rule to fulfill a certain function. A data model has a specific data structure, where a plurality of elements may be parameters that represent the characteristics of the data. The data interfusion module 1006 establishes a corresponding relation between a predetermined data element of the data acquisition model acquired from the data collection module 1002 and the corresponding data model retrieved from the database 1012 to form an interfusion model, which forms a connection between the data and the data model.

The data interfusion module 1006 receives, from the gateway 1014, data collected from the field, uses the data in the interfusion model to obtain the corresponding relation between the predetermined data element of the model and the corresponding data model, preprocesses data collected from the field to generate preprocessed data that meets the input requirement of the corresponding data model, stores the preprocessed data in the data structure of the data model to construct an application instance, and stores the application instance in the database 1012.

The template management module 1008 is in communication connection with the data collection module 1002, the application module 1004, the data interfusion module 1006, the application library 1010, and the database 1012; it can manage the calling of various models/templates, etc., and can also manage a JAR package in the application library 1010.

The application library 1010 is in communication connection with the template management module 1008, and is an external dependent library. A user can use the application library 1010 to develop an application. If a JAR package required for application development does not exist in the database 1012, the application module 1004 may be retrieved from the application library 1010 by the template management module 1008.

The database 1012 is in communication connection with the template management module 1008, and is also in communication connection (not shown in Figure 1) with the data collection module 1002, the application module 1004, and the data interfusion module 1006. It stores various models/templates, application JAR packages, function libraries, and data to be called by the data collection module 1002, the application module 1004, and the data interfusion module 1006 through the template management module 1008; it can also receive modified templates/models and data from the data collection module 1002, the application module 1004, and the data interfusion module 1006, and store them.

The gateway 1014 is in communication connection with the data collection module 1002 and the data interfusion module 1006, and comprises a model builder 10142 and an adapter 10144. The model builder 10142 obtains a data acquisition model, for example, relevant parameters of an asset model, from the data collection module 1002, and based on these parameters, construct a model for obtaining data from the field. The adapter 10144 calls the corresponding protocol based on a data aquisition model obtained from the data collection module 1002, for example, relevant parameters of the asset model, to communicate with the field data collection module 1', thereby collecting data from the field through the field data collection module 1'. Here, although collection of data from the field through the field data collection module 1' via a gateway has been described, the present invention is not limited thereto, and data may also be collected from an external cloud platform, an internal cloud platform, external software or system, etc., via a gateway.

The gateway 1014 sends the data collected from the field to the data interfusion module 1006.

The web browser 1016 is in communication connection with the data collection module 1002, the application module 1004, and the data interfusion module 1006. For example, a user can, through the web browser 1016, modify a data acquisition model retrieved from a database by the data collection module 1002, such as parameters of an asset model, and the data collection module 1002 can save the modified asset model back to the database 1012 through the template management module 1008. For example, a user can, through the web browser 1016, modify elements of the data structure of the data model retrieved by the data interfusion module 1006 from the database 1012, and the data interfusion module 1006 can save the modified data structure of the data model back to the database 1012 through the template management module 1008. For example, a user can, through the web browser 1016, view which templates/models are in the database in the application module 1004, and select a template/model as needed.

A method for forming an interfusion model of interfusing data with an application according to an embodiment of the present invention is implemented by the data interfusion module 1006. For convenience of description below, the interface of the data interfusion module 1006 will be described below.

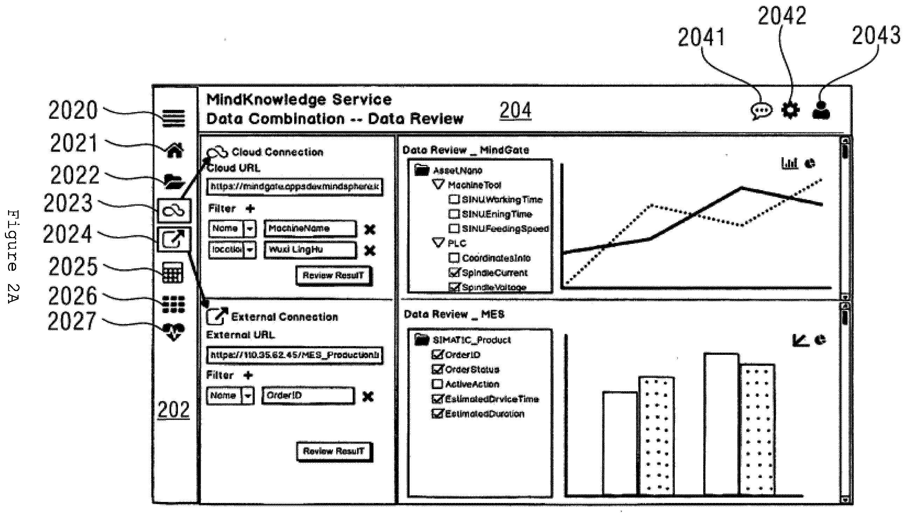

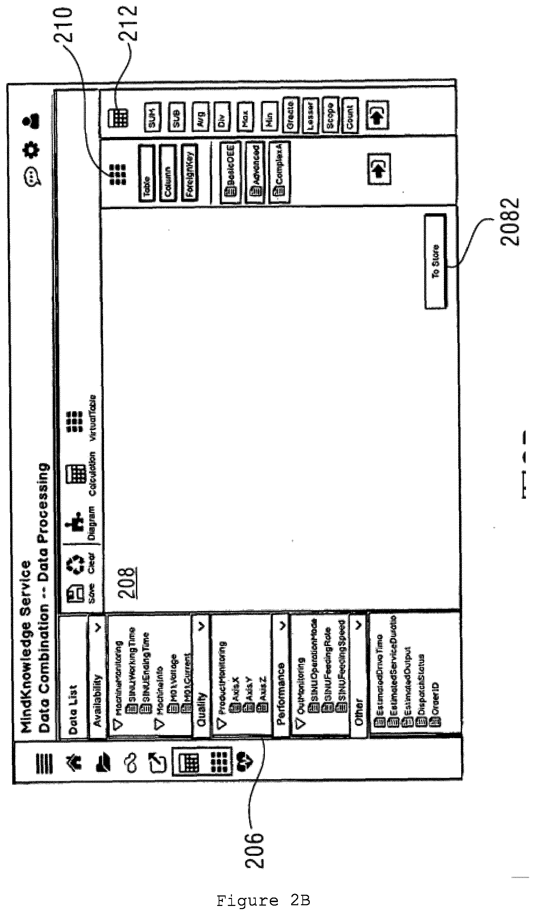

Figures 2A and 2B show interface diagrams for the data interfusion module 1006. The interface of the data interfusion module 1006 comprises the "Data Review" interface shown in Figure 2A and the "Data Processing" interface shown in Figure 2B.

As shown in Figures 2A and 2B, both interfaces of the data interfusion module 1006 comprise a setting bar 202 on the left of the interface and a title bar 204 in the upper part of the interface. The setting bar 202 comprises the following items:
Drop-down menu item 2020: This item allows a user to select the "Data Review" interface or the "Data Processing" interface of the data interfusion module 1006;
Homepage item 2021;
Folder item 2022: This item allows a user to open a desired project;
Cloud connection item 2023: This item allows a user to connect to the cloud;
External connection item 2024: This item allows a user to make an external connection;
Calculation item 2025: This item allows a user to perform various calculations;
VirtualTable item 2026: This item allows a user to select a data model that meets an application requirement and modify elements of the data structure of the data model;
Monitoring item 2027: This item allows a user to monitor whether a data connection is normal.

The title bar 204 displays the name of a corresponding interface. For example, when a user opens the "Data Review" interface, the title name "MindKnowledge Service--Data Review" is displayed in the title bar 204.

The title bar 204 further comprises the following items:
Message item 2041: This item is used to give a system message. For example, when a data connection is interrupted, the user is notified of the data connection interruption through this message item;
Authority setting item 2042: This item allows a user to set an account, usage authority, database configuration, etc.;
User setting item 2043: This item allows a user to set personal information, such as a username, an email address, and an avatar.

In the "Data Review" interface shown in Figure 2A, when the cloud connection item 2023 and the external connection item 2024 in the setting bar 202 are clicked, a series of controls for data acquisition connections and caching are displayed in the first part of the "Data Review" interface; the series of controls may be operated to obtain data from a cloud platform, external software or systems and cache the obtained data. For example, in the "Cloud Connection" part as shown in Figure 2A, a user can set the "Cloud URL" to "https://mindgate.appsdevmindsphere.k", and set "name" to "MachineName" and "Location " to "Wuxi LingHu" under "Filter+". With this setting, a user can obtain, from https://mindgate.appsdevmindsphere.k, the sequence data of the device located at "Wuxi LingHu" and named "MachineName". In the "Data Review" interface as shown in Figure 2A, dynamic data retrieval and filtering are supported to quickly retrieve data.

Here, the data interfusion module 1006 will check the URL format and attempt to establish a connection based on the service login information, and the user does not need to recheck the login information or security issues.

In a similar manner, the user can perform the above-described similar settings on the "External Connection" part as shown in Figure 2A to obtain data from external software or systems, and no similar descriptions will be provided again herein.

In the interface as shown in Figure 2A, when "Review Result" is clicked, the data obtained through a cloud connection and an external connection will be cached in the cache pool of the data interfusion module 1006, and the cached data will be displayed in the second part of the "Data Review" interface. Here, data that a user wants to display may be selected in the second part of the "Data Review" interface according to the user's needs. For example, for data obtained from a cloud connection, the data selected here to be displayed is the "SpindleCurrent" and "SpindleVoltage" of the device, which are displayed in a curve based on the recommendation given by the data acquisition model. A user can also set a data display mode by using the "●" as shown in Figure 2A.

In a similar manner, a user can perform the above-described similar operations on the display of the data obtained from the external connection as shown in Figure 2A, and no similar descriptions will be provided again herein.

Thus, the user can view the cached data to check whether the data is the desired data.

Although data acquisition with only one cloud connection and one external connection is shown here, the present invention is not limited thereto; a plurality of cloud connections and external connections may be added by using the cloud connection item 2023 and the external connection item 2024 in the setting bar 202 of the data interfusion module 1006.

The "Data Processing" interface as shown in Figure 2B further comprises a "Data List" area 206, an editing area 208, a virtual table area 210, a tool area 212, and shortcut menu items "Save", "Clear", "Diagram", "Calculation", and "VirtualTable" items.

The Data List area 206 displays the data elements of the data acquisition model in the classification form recommended by the data acquisition model, for example, SINUWorking Time, SINUWorking Time, Axis X, Axis Y, Axis Z, etc. Here, SINUWorking Time, SINUWorking Time, Axis X, Axis Y, Axis Z, etc. are examples of "data elements" of a data acquisition model in the present invention.

If the virtual table item 2026 in the setting bar 202 is clicked, then data models (for example, BasicOEE) and virtual table elements (for example, Table, Column, and ForeignKey) that the user can select are displayed in the virtual table area 210 in the form of a chart, allowing the user to edit and extend the data model. The user can hide the virtual table area 210 by using the arrow 2101 as shown in Figure 2B.

If the calculation item 2025 in the setting bar 202 is clicked, then various operators for calculation that the user can perform, such as SUM, SUB, and Avg, are displayed in the tool area 212 in the form of a chart.

In the editing area 208, a user can organize a data model and data element to establish a bridge connection between the data model and data, and a "To Store" item 2082 exists in the editing area 208, so that the user can store a formed interfusion model and related information.

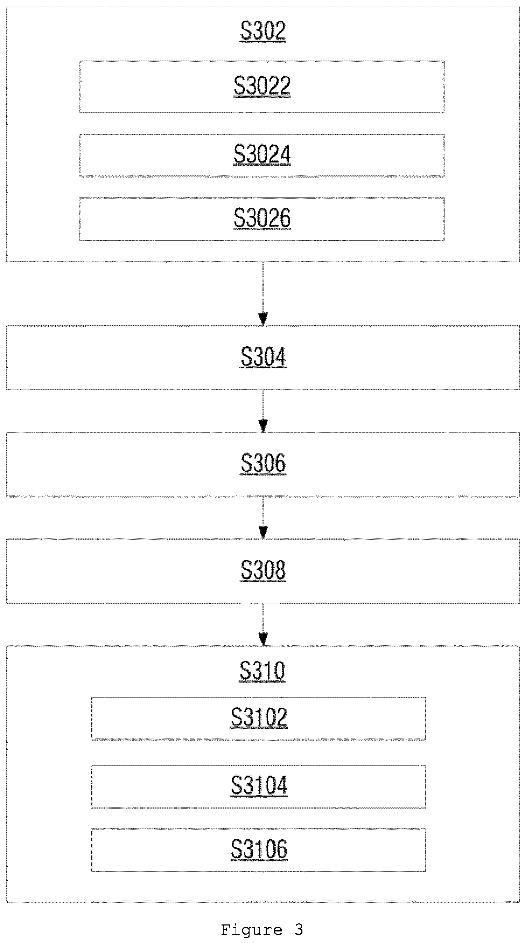

Figure 3 shows a flowchart for a method for forming an interfusion model of interfusing data with an application according to an exemplary embodiment of the present invention. Referring to Figure 3, a method for forming an interfusion model of interfusing data with an application according to an exemplary embodiment of the present invention comprises:
Step S302: View data.

Specifically, in step S3022, in the first part of the "Data Review" interface shown in Figure 2A, various controls for setting a cloud connection and/or an external connection are displayed; after "Review Result" is clicked, data are collected by a cloud connection and/or an external connection, and the data are cached in a cache pool. The "Data Review" interface mentioned here is a specific example of the "second interface" in the present invention.

In step S3024, in the second part of the "Data Review" interface shown in Figure 2A, according to the user's settings, data is displayed in various forms, such as charts, bar graphs, and curves, so that the user can view the data conveniently and visually understand whether the cached data is the desired data.

In step S3026, the cached data is automatically classified according to relevant parameters of the data acquisition model received from the data collection module 1002, and data elements of the data acquisition model are displayed, for example, in the Data List area 206 as shown in Figure 2B in the classification form recommended by the data acquisition model. Here, data is automatically classified while being cached.

Step S304: Select a data model according to a requirement of the application.

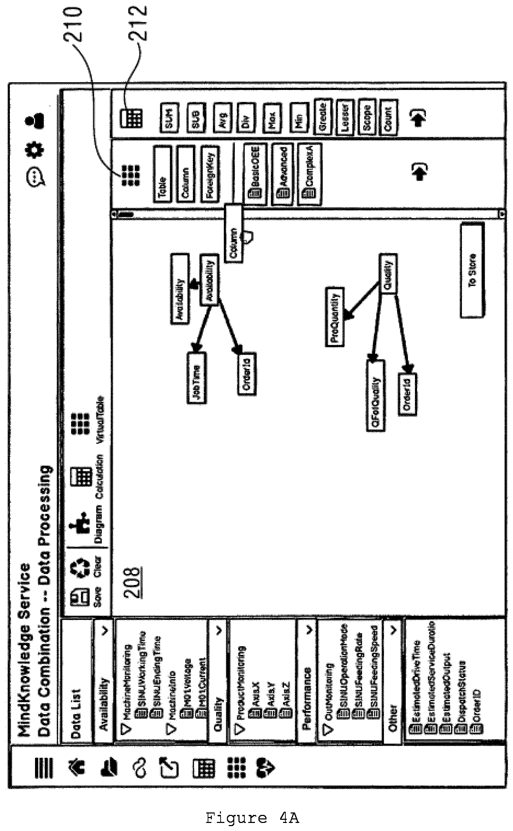

Refer to Figures 4A to 4D; Figures 4A to 4D show interface diagrams for the process of forming an interfusion model in the "Data Processing" interface of the data interfusion module 1006 according to an embodiment of the present invention.

Specifically, an existing data model may be retrieved from the database 1012 through the template management module 1008 according to a requirement of the application. For example, as shown in Figure 4A, assuming that the data model that meets the application requirement is the "BasicOEE" model, drag the "BasicOEE" option in the virtual table area 210 of the "Data Processing" interface to the editing area 208, and the corresponding data model retrieved from the database is displayed in the first part of the editing area 208 of the "Data Processing" interface. The user can see the data structure of the data model in the first part of the editing area 208. For example, the data structure of the "BasicOEE" model comprises two tables "Availability" and "Quality", the columns "Availability" and "Job time", as well as the foreign key (Foreignkey) "OrderId" under table "Availability", and the columns "ProQuantity" and "QFofQuality", as well as the foreign key "OrderId", etc. under table "Quality". Here, the columns "VFofAvailability", "Job time", "ProQuantity", "QFofQuality", etc. and foreign key (Foreignkey) are specific examples of elements of the data structure in the present invention. The "editing area 208" is a specific example of the "first interface" in the present invention.

Referring to Figure 3, optionally, step S306 is performed: Modify the selected data model.

A user can modify the existing data model as needed. For example, after a data model is retrieved from a database, on the data structure of the displayed data model, the elements in the data structure may be modified as required by the application, for example, by adding a new element, reducing an existing element, or changing the name of an element, to form a new data model that meets the application requirement.

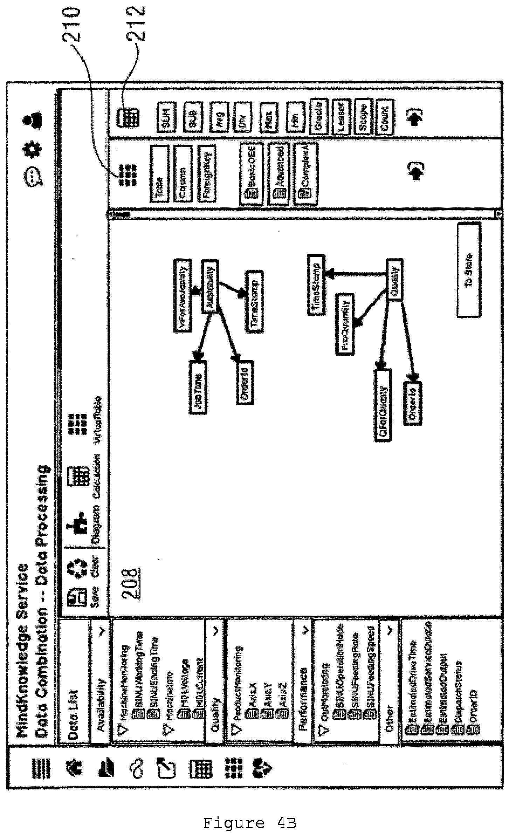

For example, as shown in Figure 4B, a user can add, in a drag-and-drop manner, a new column "Timestamp" from the virtual table area 210 to the table "Availability" and the table "Quality" of the data model selected in Figure 4A, and rename the column "Availability" under the table "Availability" to "VFofAvailability", thereby forming a new data model.

In addition, a user can also establish an inter-element relation or modify an inter-element relation for elements of the data structure of a data model.

Step S308: Select a predetermined data element in the data acquisition model, and establish a corresponding relation between the predetermined data element and the selected data model to form an interfusion model.

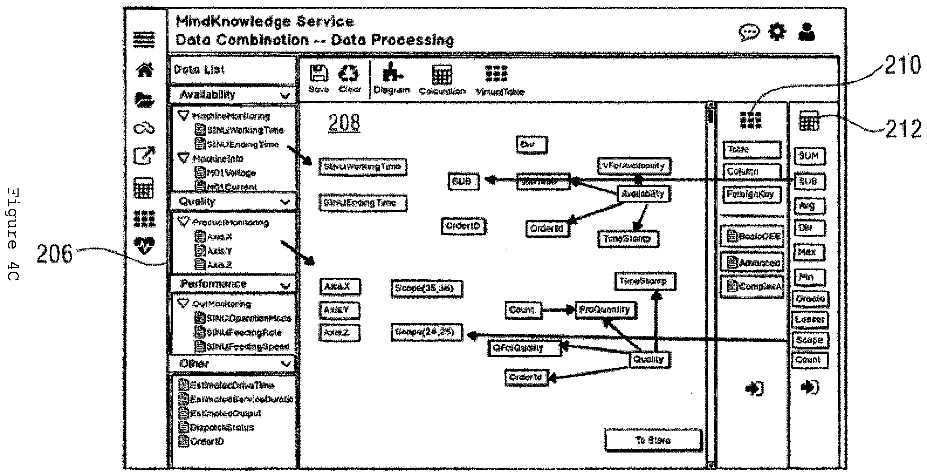

As an example, a predetermined data element in the data acquisition model may be selected according to the data structure of the selected data model. For example, as shown in Figure 4C, the "Job Time" element exists in the data structure of the modified data model, and data elements such as "SINUworkingTime", "SINUEndingTime", "Axis X", "Axis Y", "Axis Z", and "EstimatedDriveTime" exist in the data acquisition model; then, the data elements that may be associated with the "Job Time" element in the data structure should be "SINUworkingTime" and "SINUEndingTime". Therefore, according to the data structure of the data model with the preceding elements, at least the data elements "SINUworkingTime" and "SINUEndingTime" in the data acquisition model should be selected.

As shown in Figure 4C, the data elements "SINUworkingTime" and "SINUEndingTime" in the Data List area 206 are dragged and dropped into the editing area 208. Similarly, when the data elements "Axis X", "Axis Y", "Axis Z", and "EstimatedDriveTime" are dragged and dropped into the editing area 208, the above-mentioned predetermined data elements dragged and dropped into the editing area 208 will be displayed in the second part of the editing area 208.

In addition, a certain calculation relation and input/output relation need to be formed between the selected data elements (for example, "SINUworkingTime", "SINUEndingTime", "Axis X", "Axis Y", "Axis Z", and "EstimatedDriveTime") and the elements (for example, "Job Time", "ProQuantity", and "VFofAvailability") in the data structure of the data model, thereby establishing a connection between them. For example, as shown in Figure 4C, the "SUB", "Div", "Scope", and "Count" operators in the tool area 212 are dragged and dropped into the third part of the editing area 208, and, with "SINUworkingTime" and " SINUEndingTime" as input and "Job Time" as output, a subtraction "SUB" operation is established between "SINUworkingTime" and "SINUEndingTime" to obtain the output "Job Time". Similarly, the "Scope" and "Count" operations may be established between the data elements "Axis X", "Axis Y", "Axis Z" and the column "proQuantity" of the data structure, the "Div" operation may be established between the data element "EstimatedDriveTime" and the columns "Job Time" and "VFofAvailability" of the data structure, and the corresponding input/output relations and calculation relations are established between them.

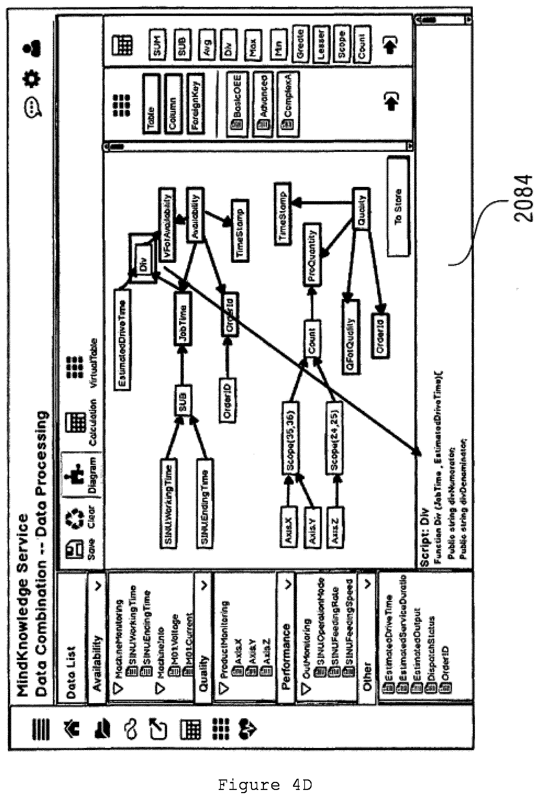

In addition, as shown in Figure 4D, for example, when the operation element Div is double-clicked, the operation block in the database is called, and a script editing area 2084 is formed below the editing area 208 of the "Data Processing" interface. The script editing area 2084 supports simple modification of operation block scripts, usually allowing a user to modify a calculation parameter and correlation coefficient.

In the above-described manner, a corresponding relation is established between the predetermined data elements of the data acquisition model and the selected data model to form an interfusion model.

As another example, it is possible to automatically select predetermined data elements of a data acquisition model without knowing the data structure of the data model, thereby establishing a corresponding relation between the predetermined data elements and the data model.

For example, after a suitable data model is selected, a description of the data attributes in the data model is obtained and, at the same time, the keywords set in the data acquisition model are obtained; according to the keywords set in the data acquisition model and the description of the data attributes (elements) in the data model, a calculation relation and input/output relation may be set automatically between the predetermined data elements and the data model.

In the above-described manner, predetermined data elements of the data acquisition model are automatically selected and a corresponding relation is established between the predetermined data elements and the selected data model to form an interfusion model.

After a calculation relation and input/output relation are established between the predetermined data elements and the data model to form an interfusion model, the information describing the predetermined data elements of the data acquisition model is formed into a configuration file, for example, in the Json or Xml format, and the processing information describing the above-described calculation relation and input/output relation in the interfusion model and the information describing the data structure of the data model in the interfusion model are formed into process model files, such as Json, Xml, and RDF files; the configuration file, process model files, and the interfusion model in the form of a file are stored in the database 1012.

Although the above example demonstrates the formation of an interfusion model by establishing a corresponding relation between predetermined data elements of the data acquisition model and a modified data model, the present invention is not limited thereto. As required by an application, a corresponding relation may also be established between the predetermined data elements of the data acquisition model and an unmodified data model retrieved from a database, thereby forming an interfusion model.

Step S310: Store the instance.

In step S3102, the configuration file formed in step S308 is obtained and, based on the information in the configuration file that describes the predetermined data elements of the data acquisition model, data cached in a cache pool of the data interfusion module 1006 in step S3022 is retrieved from the cache pool.

In step S3104, a processing model file formed in step S308 is obtained, and data obtained from a cache pool in step S3102 is preprocessed on the basis of processing information in the processing model file that describes the calculation relation and the input-output relation between the predetermined data elements and the data model, that is, by performing operations such as SUB and Div, to form the input data required by the data model.

In step S3106, a processing model file formed in step S308 is obtained, a data structure of the data model is constructed according to the data structure information of the data model described in the processing model file, and the input data generated after preprocessing in step S3104 is stored in the data structure of the data model to form an application instance, which is then stored in a database.

In this exemplary embodiment, by viewing the cached data, the user can intuitively determine whether the cached data is the desired data; with data acquisition by a data acquisition module, the user does not need to be familiar with an application program interface (API) or communication mechanism, and thus is relieved of the burden of learning an API, communication protocols, and data analysis; since a corresponding relation is established between the data elements of a data acquisition model and a data model to form a connection between actual data and the data model, a user does not need to complete the mapping between front-end application display and back-end code through hard coding, and thus the coupling between data and an application is reduced; this allows a user to interfuse data with an application conveniently and flexibly.

According to an embodiment of the present invention, a device for forming an interfusion model of interfusing data with an application is further provided, comprising: a data interfusion module, wherein a data model retrieved from a database according to a requirement of the application is displayed in a first part of a first interface of the data interfusion module; a predetermined data element in the data elements of the data acquisition model is displayed in a second part of the first interface of the data interfusion module, wherein the data acquisition model is used to acquire data, and the data elements represent attributes of the data; and a corresponding relation between the predetermined data element and the data model is established in a third part of the first interface of the data interfusion module to form an interfusion model.

A method for implementing a device for forming an interfusion model of interfusing data with an application is the same as the method for forming an interfusion model of interfusing data with an application as described with reference to Figure 3, and no similar descriptions will be provided again herein.

According to an embodiment of the present invention, a system for forming an interfusion model of interfusing data with an application is further provided, comprising: a database; a data collection module for retrieving a data acquisition model from the database, wherein the data acquisition model is used to acquire data and comprises data elements that represent attributes of the data; and a data interfusion module, wherein a data model retrieved from a database according to a requirement of the application is displayed in a first part of a first interface of the data interfusion module; a predetermined data element in the data elements of the data acquisition model is displayed in a second part of the first interface of the data interfusion module; and a corresponding relation between the predetermined data element and the data model is established in a third part of the first interface of the data interfusion module to form an interfusion model.

The structure of a system for forming an interfusion model of interfusing data with an application has been described in Figure 1, and a method for implementing it is the same as the method for forming an interfusion model of interfusing data with an application as described with reference to Figure 3; therefore, no similar descriptions will be provided again herein.

According to an embodiment of the present invention, a storage medium is further provided, the storage medium comprising a stored program, wherein the program, when run, causes a device comprising the storage medium to implement the above-described method for forming an interfusion model of interfusing data with an application.

According to an embodiment of the present invention, a processor is further provided, which is used to run a program, wherein, when the program is run, the above-described method for forming an interfusion model of interfusing data with an application is implemented.

According to an embodiment of the present invention, a terminal is further provided, comprising: one or more processors, a memory, a display device, and one or more programs, wherein the one or more programs are stored in the memory and configured to, when executed by the one or more processors, implement the above-described method for forming an interfusion model of interfusing data with an application.

In each of the above-described embodiments of the present invention, particular emphasis is put on an aspect, respectively; for a part not detailed in an embodiment, references may be made to relevant descriptions in other embodiments.

It should be understood that the technical contents disclosed in the embodiments provided by the present invention may be implemented by other methods. The above-described device embodiment is only illustrative. For example, the division of said units or modules is only logical function division, and an alternative division method may be employed in actual implementation. For example, a plurality of units or modules may be combined or integrated into another system, or certain characteristics may be ignored or not be executed. In addition, the shown or discussed mutual coupling or direct coupling or communication connection may be established via certain interfaces, and indirect coupling or communication connection between modules or units may be electrical or in any other form.

Said units or modules described as separate components may or may not be physically separated. Components shown as units or modules may or may not be physical units or modules; in other words, they may be located in the same place or may be distributed on a plurality of network units or modules. An objective of the technical solution of an embodiment may be achieved by selecting some or all of the units or modules based on actual needs.

Further, the functional units or modules in each embodiment of the present invention may be integrated in one processing unit or module, or each of the functional units or modules may exist physically and separately, or two or more units or modules may be integrated in one unit or module. Said integrated unit or module may be implemented in the form of hardware or may be implemented in the form of a software functional unit or module.

To be implemented in the form of a software functional unit and sold or used as a standalone product, said integrated unit may be stored in a computer-readable storage medium. Based on such an understanding, the technical solution of the present invention essentially, or for a part contributing to the prior art, or for all or part of the technical solution, may be embodied in the form of a software product. The computer software product is stored in a storage medium, comprising a plurality of instructions for causing a computer device (a personal computer, server, network device, etc.) to execute all or part of the steps of the method described in each embodiment of the present invention. Examples of the above-described storage medium include USB drive, Read-Only Memory (ROM), Random Access Memory (RAM), movable hard disk, magnetic disk, CD-ROM, or any other medium that can store program code. While the present invention has been particularly described above with reference to preferred embodiments, it should be understood that those of ordinary skill in the art can make various improvements and modifications without departing from the principle of the present invention, and that such improvements and modifications also fall into the protection scope of the present invention.

## Claims

1. A method for forming an interfusion model of interfusing data with an application, **characterized by** comprising:
displaying a data model retrieved from a database according to a requirement of an application in a first part of a first interface;
displaying a predetermined data element in data elements of a data acquisition model in a second part of the first interface, wherein the data acquisition model is used to acquire data, and the data elements represent attributes of the data; and
establishing a corresponding relation between the predetermined data element and the data model in a third part of the first interface to form the interfusion model.

2. The method as claimed in claim 1, wherein establishing a corresponding relation between the predetermined data element and the data model in a third part of the first interface to form the interfusion model comprises:
selecting the predetermined data element from the data elements according to the data structure of the data model; and
setting a calculation relation and input/output relation between the predetermined data element and the data model to form the interfusion model.

3. The method as claimed in claim 1 or 2, wherein establishing a corresponding relation between the predetermined data element and the data model in a third part of the first interface to form the interfusion model comprises:
automatically setting a calculation relation and input/output relation between the predetermined data element and the data model to form the interfusion model.

4. The method as claimed in claim 1, wherein before displaying a predetermined data element among the data elements of the data acquisition model in a second part of the first interface, the method further comprises:
operating a first control in a first part of a second interface to cache data, wherein the first control indicates a connection configuration for obtaining the data from an internal cloud platform connection and/or an external cloud platform connection and/or an external software or system connection, and caching the data comprises automatically classifying the data based on the data elements.

5. The method as claimed in claim 4, wherein after operating a first control in a first part of a second interface to cache the data, the method further comprises:
displaying the data in a second part of the second interface.

6. The method as claimed in claim 1, wherein after displaying a data model retrieved from a database according to a requirement of an application in a first part of the first interface, the method further comprises:
processing the data model in a first part of the first interface to form a new data model, wherein the processing comprises at least one of the following:
adding a new element to the data structure of the data model;
reducing an element of the data structure of the data model;
establishing an inter-element relation or modifying an inter-element relation for the elements of the data structure of the data model; and
changing the name of an element of the data structure of the data model.

7. The method as claimed in claim 6, wherein establishing a corresponding relation between the predetermined data element and the data model in a third part of the first interface to form the interfusion model comprises:
selecting the predetermined data element from the data elements according to the data structure of the new data model; and
setting a calculation relation and an input/output relation between the predetermined data element and the data model to form the interfusion model.

8. The method as claimed in claim 6, wherein establishing a corresponding relation between the predetermined data element and the data model in a third part of the first interface to form the interfusion model comprises:
automatically setting a calculation relation and an input/output relation between the predetermined data element and the new data model to form an interfusion model.

9. The method as claimed in claim 1, wherein after establishing, in a third part of the first interface, a corresponding relation between the predetermined data element and the data model to form the interfusion model, the method further comprises storing the interfusion model in the database.

10. A device for forming an interfusion model of interfusing data with an application, **characterized by** comprising:
a data interfusion module, wherein
a data model retrieved from a database according to a requirement of the application is displayed in a first part of a first interface of the data interfusion module;
a predetermined data element in the data elements of the data acquisition model is displayed in a second part of the first interface of the data interfusion module, wherein the data acquisition model is used to acquire the data, and the data elements represent attributes of the data; and
a corresponding relation between the predetermined data element and the data model is established in a third part of the first interface of the data interfusion module to form an interfusion model.

11. A system for forming an interfusion model of interfusing data with an application, comprising:
a database;
a data collection module for retrieving a data acquisition model from the database, wherein the data acquisition model is used to acquire the data and comprises data elements that represent attributes of the data; and
a data interfusion module:
a data model retrieved from a database according to a requirement of an application is displayed in a first part of a first interface of the data interfusion module;
a predetermined data element in the data elements of the data acquisition model is displayed in a second part of the first interface of the data interfusion module; and
a corresponding relation between the predetermined data element and the data model is established in a third part of the first interface of the data interfusion module to form the interfusion model.

12. A storage medium, **characterized by** storing a program, wherein the method as claimed in any one of claims 1 to 9 is implemented when the program is run.

13. A processor, **characterized by** being used to run a program, wherein the method as claimed in any one of claims 1 to 9 is implemented when the program is run.

14. A terminal, **characterized by** comprising: one or more processors, a memory, a display device, and one or more programs, wherein the one or more programs are stored in the memory and configured to, when executed by the one or more processors, implement the method as claimed in any one of claims 1 to 9.
